# EUROPEAN PATENT SPECIFICATION

(11) **EP 1 388 506 B1**
(45) Date of publication and mention of the grant of the patent: **19.10.2005**
(21) Application number: 03016605.2
(22) Date of filing: 29.07.2003
(51) Int. Cl.: B65G 45/16

(54) **Cleaning scraper with modified blade holder**
Reinigungsschaber mit modifiziertem Blatthalter
Racleur de nettoyage avec support de lame modifié

(30) Priority: 08.08.2002 IT VI20020180
(43) Date of publication of application: 11.02.2004
(73) Proprietor: Dal Ferro, Bortolo Giulio, 36030 Montecchio Precalcino (VI) (IT)
(72) Inventor: Dal Ferro, Bortolo Giulio, 36030 Montecchio Precalcino (VI) (IT)
(74) Representative: Bonini, Ercole

(56) References cited:
- EP-A- 0 869 090
- GB-A- 2 081 662
- US-A- 5 826 700

## Description

The present invention relates to a cleaning doctor for conveyor belts with modified blade holder.

It is well known that the surfaces of conveyor belts more particularly if they are used to convey powder and wet substances, should be kept clean by means of devices adapted to prevent adhesion of the material.

To this purpose in the discharge area of the conveyor belts there are proper cleaning doctors provided with blades scraping the belt surface.

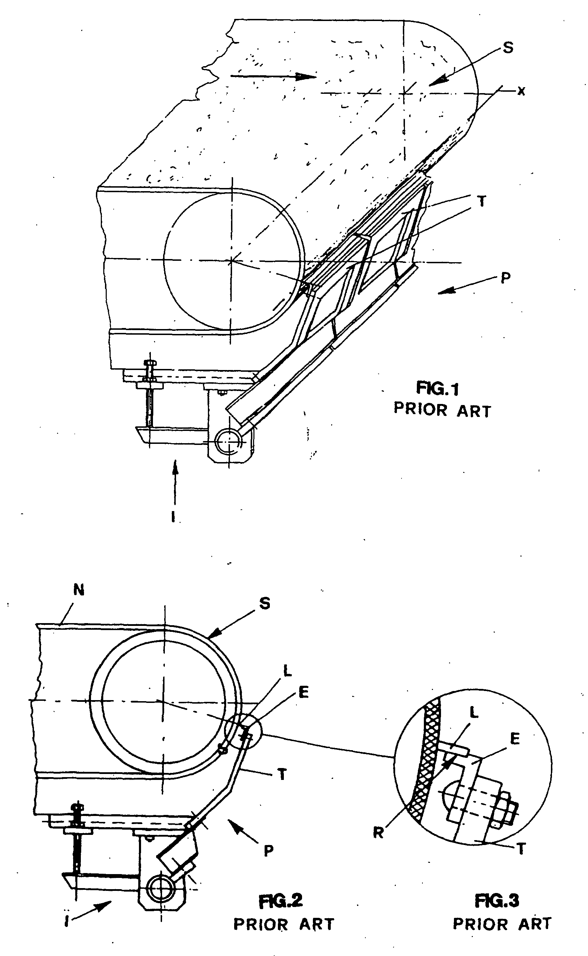

A cleaning doctor of the prior art is shown in the isometric view of Fig. 1 where it is indicated with P and generally comprises a fixed casing I connected to the frame supporting the conveyor belt and to the floor, a plurality of frames T being applied to the casing.

Each frame T is connected to the fixed casing I and a doctor blade L is associated to the frame and can be seen more particularly in Figs. 2 and 3, said blade being in contact with the surface S to be scraped of the conveyor belt N.

The frames T are removably applied to the casing I and are mutually aligned so as to define on the surface S of the conveyor belt N a scraping line X shown in Fig. 1.

With particular reference to Fig. 2 one can see that each doctor blade L is associated to a blade holder E in its turn connected to the frame T through screw means as shown in Fig. 3.

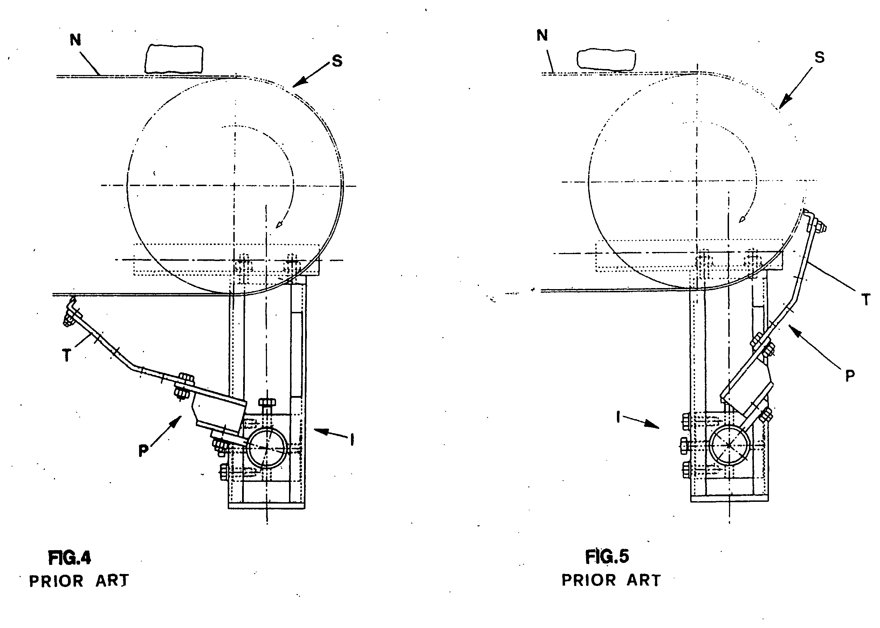

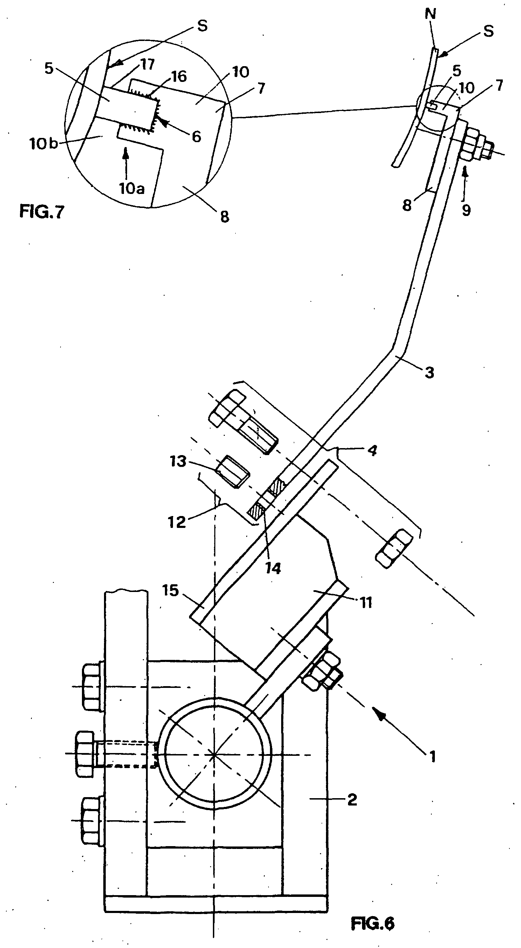

One can see particularly in Figs. 4 and 5 that by using the blade holder E having an L shape, it is possible to scrape easily the surface S of the belt N at the lower part or the front part of the discharge end, or even in other different positions not shown in the drawings.

The provision of the L shaped blade holder E is therefore very useful because it allows to arrange the blade at an angle to the surface of the conveyor belt and in different working positions by modifying the position of the frames T thus keeping substantially unchanged the position of the fixed casing I.

More particularly in the enlargement of Fig. 3 one can see that each doctor blade L has a face leaning on the blade holder E at a recessed step R made in the blade holder E.

The blade can be fixed by adhesives, adhesives and screws or by braze welding.

The drawbacks shown by said fastening systems consist in that they have a not sufficiently firm constraint between blade L and blade holder E so that in use the blade L may easily get detached from the blade holder E.

Moreover the fastening systems by braze welding are quick but they have the drawback to cause deformation of the doctor blade and the relevant blade holder during the brazing operation occurring at high temperature through an oxyacetylene torch.

As to the fastening systems by adhesives, they use adhesive resins, preferably two component epoxy resins; the connection is much quicker than braze welding and does not cause deformations because it occurs at room temperature.

An improvement of the mechanical strength is obtained by fastening with screws such a cleaning doctor is disclosed by document GB-A-2 081 662 that however has also some drawbacks.

Indeed in use the blade runs out and when wear is near the screw insertion hole, the blade breaks off and gets detached from the blade holder thus requiring intervention of the service staff.

All the above mentioned connection systems have therefore the drawback of carrying out poorly resistant joints or anyway subject to frequent failures consequently requiring repeated service interventions.

It is clear that each service intervention involves stopping the plant and therefore the user, in addition to the maintenance cost, should also bear the cost of lost production.

A further fastening system provides to use fastening plates where the doctor blade L is constrained to the corresponding blade holder E by pressure of a plate that is fixed to the blade holder with screws.

This fastening system is frequently used when the blade holders are straight and not shaped with an L profile.

This fastening system is better from the point of view of strength in comparison with the previously mentioned fastening systems, but it has the drawback to be rather expensive also because it requires to machine the blade holder and to use screws, nuts and plates.

Moreover this system is also difficult to be installed especially during maintenance and repair.

The present invention aims at overcoming said drawbacks.

More particularly a first object of the invention is to provide a cleaning doctor for conveyor belts which is more reliable relative to the cleaning doctors of the prior art.

Another object of the invention is to provide a cleaning doctor having lower operating costs relative to equivalent cleaning doctors of the prior art.

The foregoing objects are attained by a cleaning doctor for conveyor belts according to claim 1.

According to one aspect of the invention the blade holder has an L shaped cross section and is made from a commercially available angle iron which is cut to size X and machined to receive the holes for fixing to the frame and the groove receiving the doctor blade.

The groove has an U shaped profile seen in cross section and is made in the blade holder at the face of the projecting side facing the surface to be scraped

In other embodiments the blade holder is made from a prismatic structure member, preferably in the form of a parallelepiped with rectangular cross section.

Preferably the groove is made by a milling operation.

The doctor blade consists of a prismatic element preferably parallelepipedal having a length at least equal to the length of the blade holder and a width greater than the depth of the U shaped groove so as to project from the blade holder after coupling.

Fastening of the blade to the relevant blade holder occurs by gluing or by mechanical fixed joint.

Advantageously the provision of the U shaped groove reduces oscillation of the blade in use to the minimum and this reduces the possibility that the blade gets detached by failure of the fastening means as it happens in the prior art.

Still advantageously it is possible to modify the cleaning doctors of the prior art simply changing the blade holders according to the invention.

The foregoing objects and advantages are hereinafter described with reference to the accompanying sheets of drawing in which:
- Fig. 1 is an isometric view of a cleaning doctor of the prior art;
- Fig. 2 is a side view of Fig. 1;
- Fig. 3 is an enlargement of a detail of Fig. 2;
- Figs. 4 and 5 show two different embodiments of the cleaning doctor of Fig. 1;
- Fig. 6 is a partially exploded view of the cleaning doctor of present invention;
- Fig. 7 shows a detail of Fig. 6;
- Fig. 8 is an isometric view of another detail of the cleaning doctor of Fig. 6; and
- Fig. 9 is a constructional variation of a detail of the cleaning doctor of the invention.

The cleaning doctor of the invention is shown in a partially exploded view in Fig. 6 where it is generally indicated with 1.

It comprises a fixed casing generally indicated with 2, to which one or more frames 3 are applied through fastening means such as bolts 4.

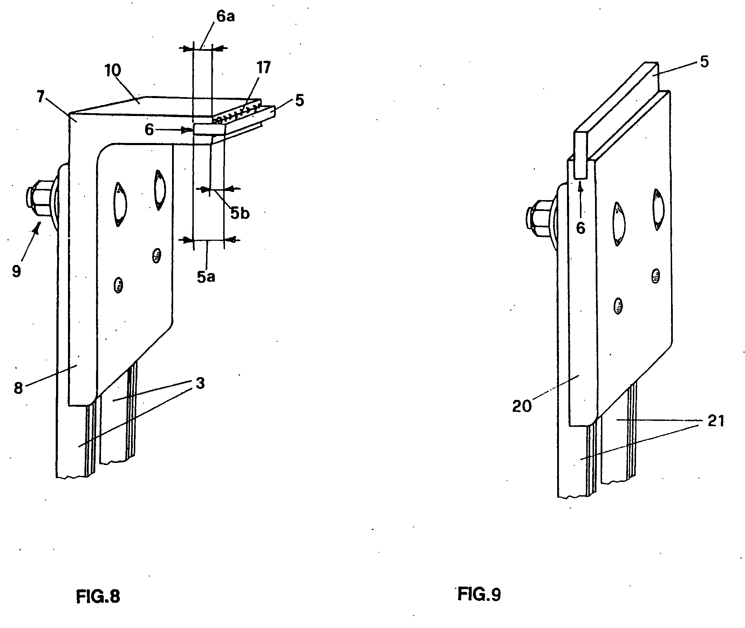

One can see with reference also to the detail of Fig. 7 and the isometric view of Fig. 8, that the frame 3 is provided with a doctor blade 5 which is in contact with the surface S of the belt N to be scraped.

According to the invention the doctor blade 5 is arranged in a groove 6 made in a blade holder 7 having an L shaped cross section and associated to the frame 3.

More particularly in the blade holder 7 there is a first side 8 removably fixed to the frame 3 through fastening means consisting of bolts 9 and a second side 10 facing the surface S to be scraped, in which the groove 6 is made.

The groove 6 is made at the free end 10a of the second side 10 along the face 10b facing the surface S to be scraped and has an U shaped profile when seen in cross section.

Preferably the groove 6 is made by a milling operation and although not shown in the drawings, its cross section may also have a profile different from the U shape.

With particular reference to Figs. 7 and 8 one can see that the length 5a of the doctor blade 5 is greater than the depth 6a of the groove 6 so that the doctor blade 5 projects from the face 10b of the blade holder 7 for an amount 5b.

Preferably to reduce the manufacturing cost, the blade holder 7 is made from an L shaped angle iron available on the market that is cut down to size of length 7a at the user's choice.

Moreover the frame 3 is connected to the casing 2 by interposing elastic means 11 preferably made by an elastomeric block, in order to make the frame 3 yielding during the scraping operation.

To improve the possibility of adjusting the pressure of the doctor blade 5 on the surface S, at the end of the frame 3 there are adjusting means generally indicated with 12 known per se and consisting of a screw 13 inserted inside a threaded hole 14 made in the frame 3 and abutting against one of the plates 15 holding the elastic means.

Inside the groove 6 the doctor blade 5 is fixed through fixed joining means that may comprise for instance adhesive material 16 of the two component epoxy kind which is interposed between the groove 6 and the blade 5.

In other embodiments the joining means consist of a welding that in this case is made by two seams 17 arranged on both sides of the doctor blade 5 at the face 10b of the blade holder 7.

In some other embodiments the connection may be obtained by mechanical fixed joint between groove 6 and blade 5.

The embodiment of the invention described and illustrated in the figures of the drawings, is particularly advantageous because it attains the object to connect the doctor blade 5 to the blade holder 7 in a more rigid and stable way in comparison with the embodiments of the prior art.

Indeed according to the invention most part of the volume of the doctor blade 5 is contained inside the groove 6 and being constrained at two opposite surfaces, it is less subject to oscillate and therefore to break or detach during the scraping operation.

Its greater stability involves a lower stress of the welding seams 17 or gluing 16 thus reducing possibility of failures, and increasing the useful life of the doctor 1 until the doctor blade 5 is worn out.

Obviously the doctor blade 5 and the blade holder 7 may be made of any material although the doctor blade is preferably made of sintered material such as Widia.

According to a constructional variation shown in Fig. 9, the doctor blade 5 is arranged in the groove 6 that is made in a blade holder 20 of parallelepipedal shape and associated to a frame 21.

Such an embodiment is particularly suitable when the cleaning doctor operates with the doctor blade 5 arranged vertically.

On the basis of the foregoing one can see that the cleaning doctor of the invention in both above described embodiments of the blade holders attains all the intended objects.

Many modifications may be made in the constructional stage to the cleaning doctor of the invention, to improve its functionality or make its construction cheaper.

Therefore the doctor blade 5 may for instance have a profile of any shape and the same applies also to the groove 6 in which it is arranged.

The foregoing and other possible variations that were neither described nor shown in this application, when they should fall within the scope of the appended claims, are to be considered covered by the present invention.

## Claims

1. A cleaning doctor (1) for conveyor belt (N) comprising a fixed casing (2) supporting one or more frames (3; 21) coupled to said casing through elastic means (11), each of said frames supporting a blade holder (7; 20) movably fixed to said frames (3; 21) through fastening means (9), said blade holder holding a doctor blade (5) put in contact with the surface (S) of said conveyor belt (N), **characterized in that** said blade holder (7; 20) has a groove (6) holding the most volume of said doctor blade (5), said doctor blade (5) and said groove (6) being fixed by a fixed joint

2. The cleaning doctor (1) according to claim 1) **characterized in that** said blade holder (7) has an L shaped cross section.

3. The deaning doctor (1) according to claim 1) **characterized in that** said blade holder (20) has a rectangular cross section.

4. The cleaning doctor (1) according to claim 2) **characterized in that** said blade holder (7) has a first side (8) fixed to said frame (3) and a second side (10) facing said surface (S) to be scraped, said groove (6) receiving said doctor blade (5) being made in said second side (10).

5. The cleaning doctor (1) according to any of claims 1), 2) or 4), **characterized in that** said blade holder (7) is removably fixed to said frame (3) through fastening means (9).

6. The cleaning doctor (1) according to claim 4) **characterized in that** said groove (6) is made at the free end (10a) of said second side (10) along the face (10b) facing said surface (S) to be scraped.

7. The cleaning doctor (1) according to any of the preceding claims **characterized in that** said groove (6) has a U shaped cross sectional profile receiving said doctor blade (5).

8. The cleaning doctor (1) according to claim 7) **characterized in that** said doctor blade (5) has a width (5a) greater than the depth (6a) of said groove (6).

9. The cleaning doctor (1) according to claim 2) **characterized in that** said blade holder (7) is made by a standard angle iron available on the market having an L shaped cross sectional profile.

10. The cleaning doctor (1) according to claim 1) **characterized in that** adjusting means (12) are provided between said frame (3) and said elastic means (11), adapted to change the pressure of said doctor blade (5) on said surface (S).

## Patentansprüche

1. Eine Reinigungs-Abstreicheinheit (1) für ein Förderband (N), ein fest angebrachtes Gehäuse (2) umfassend, das einen oder mehrere, mit elastischen Mitteln (11) am Gehäuse befestigte Rahmen (3; 21) hält, von denen jeder einen Messerhalter (7; 20) trägt, der mit Befestigungsmitteln (9) beweglich an dem Rahmen (3; 21) befestigt ist, wobei dieser Messerhalter ein Abstreichmesser (5) trägt, das in Kontakt mit der Oberfläche (S) des Förderbands (N) gebracht wird, **dadurch gekennzeichnet, dass** der Messerhalter (7; 20) eine Rille (6) aufweist, die das größte Volumen des Abstreichmessers (5) hält, wobei Abstreichmesser (5) und Rille (6) über eine festes Verbindung befestigt sind.

2. Die Reinigungs-Abstreicheinheit (1) gemäß Patentanspruch 1), **dadurch gekennzeichnet, dass** der Messerhalter (7) einen L-förmigen Querschnitt hat.

3. Die Reinigungs-Abstreicheinheit (1) gemäß Patentanspruch 1), **dadurch gekennzeichnet, dass** der Messerhalter (20) einen rechteckigen Querschnitt hat.

4. Die Reinigungs-Abstreicheinheit (1) gemäß Patentanspruch 2), **dadurch gekennzeichnet, dass** der Messerhalter (7) eine erste Seite (8) aufweist, die am Rahmen (3) befestigt ist, und eine zweite Seite (10), die der abzustreichenden Fläche (S) entgegengesetzt ist, wobei die Rille (6) das in der zweiten Seite (10) angefertigte Abstreichmesser (5) aufnimmt.

5. Die Reinigungs-Abstreicheinheit (1) gemäß eines jeden der vorstehenden Patentansprüche 1), 2) oder 4), **dadurch gekennzeichnet, dass** der Messerhalter (7) mit Befestigungsmitteln (9) abnehmbar am Rahmen (3) befestigt ist.

6. Die Reinigungs-Abstreicheinheit (1) gemäß Patentanspruch 4), **dadurch gekennzeichnet, dass** die Rille (6) an dem freien Ende (10a) der zweiten Seite (10) an der Vorderseite (10b) entlang ausgeführt ist, die der abzustreichenden Fläche (S) zugewandt ist.

7. Die Reinigungs-Abstreicheinheit (1) gemäß eine jeden der vorstehenden Patentansprüche, **dadurch gekennzeichnet, dass** die Rille (6) ein Profil mit U-förmigem Querschnitt aufweist, welches das Abstreichmesser (5) aufnimmt.

8. Die Reinigungs-Abstreicheinheit (1) gemäß Patentanspruch 7), **dadurch gekennzeichnet, dass** das Abstreichmesser (5) eine Breite (5a) hat, die größer ist als jene (6a) der Rille (6).

9. Die Reinigungs-Abstreicheinheit (1) gemäß Patentanspruch 2), **dadurch gekennzeichnet, dass** der Messerhalter (7) aus einem handelsüblichen Standard-Strukturprofil mit L-förmigem Querschnitt gefertigt ist.

10. Die Reinigungs-Abstreicheinheit (1) gemäß Patentanspruch 1), **dadurch gekennzeichnet, dass** sich zwischen dem Rahmen (3) und den elastischen Mitteln (11) Verstellmittel (12) befinden, dazu geeignet, den Druck des Abstreichmessers (5) auf die Oberfläche (S) zu verändern.

## Revendications

1. Un racleur de nettoyage (1) pour bande transporteuse (N) comprenant un boîtier fixe (2) supportant un ou plusieurs châssis (3; 21) reliés audit boîtier à l'aide de moyens élastiques (11), chacun desdits châssis soutenant un porte-lames (7; 20) fixé d'une manière mobile auxdits châssis (3; 21) à l'aide de moyens de fixation (9), ledit porte-lames soutenant une lame du racleur (5) qui est en contact avec la surface (S) de ladite bande transporteuse (N), **caractérisé en ce que** ledit porte-lames (7; 20) a une cannelure (6) soutenant la plupart du volume de ladite lame du racleur (5), ladite lame du racleur (5) et ladite cannelure (6) étant fixées au moyen d'un joint fixe.

2. Le racleur de nettoyage (1) selon la revendication 1) **caractérisé en ce que** ledit porte-lames (7) a une section en forme de L.

3. Le racleur de nettoyage (1) selon la revendication 1) **caractérisé en ce que** ledit porte-lames (20) a une section rectangulaire.

4. Le racleur de nettoyage (1) selon la revendication 2) **caractérisé en ce que** ledit porte-lames (7) a un premier côté (8) fixé audit châssis (3) et un deuxième côté (10) en face de ladite surface (S) à racler, ladite cannelure (6) recevant ladite lame du racleur (5) étant réalisée dans ledit deuxième côté (10).

5. Le racleur de nettoyage (1) selon une quelconque des revendications 1), 2) ou 4) **caractérisé en ce que** ledit porte-lames (7) est fixé d'une manière démontable audit châssis (3) à l'aide de moyens de fixation (9).

6. Le racleur de nettoyage (1) selon la revendication 4) **caractérisé en ce que** ladite cannelure (6) est réalisée sur l'extrémité libre (10a) dudit deuxième côté (10) le long de la face (10b) se trouvant devant ladite surface (S) à racler.

7. Le racleur de nettoyage (1) selon une quelconque des revendications précédentes **caractérisé en ce que** ladite cannelure (6) a une section en forme de U recevant ladite lame du racleur (5).

8. Le racleur de nettoyage (1) selon la revendication 7) **caractérisé en ce que** ladite lame du racleur (5) a une largeur (5a) plus grande que celle (6a) de ladite cannelure (6).

9. Le racleur de nettoyage (1) selon la revendication 2) **caractérisé en ce que** ledit porte-lames (7) se compose d'un profil structural standard disponible sur le marché ayant un profil de section en forme de L.

10. Le racleur de nettoyage (1) selon la revendication 1) **caractérisé en ce que** les moyens de réglage (12) sont prévus entre ledit châssis (3) et lesdits moyens élastiques (11), indiqués pour changer la pression de ladite lame du racleur (5) sur la dite surface (S).
